# EUROPEAN PATENT APPLICATION

(11) **EP 4 837 806 A1**
(43) Date of publication of application: **11.11.2026**
(21) Application number: 25769738.3
(22) Date of filing: 13.03.2025
(51) Int. Cl.: B60W 40/064, B60W 40/06, B60W 40/10, B60W 40/12, B60W 40/00

(54) **METHOD AND DEVICE FOR DETERMINING LONGITUDINAL ADHESION COEFFICIENT, VEHICLE, MEDIUM AND PROGRAM PRODUCT**

(30) Priority: 15.03.2024 CN 202410301421
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: SUN, Yuhang, Zhejiang 315336 (CN); QIU, Jianping, Zhejiang 315336 (CN); SUN, Yongsheng, Zhejiang 315336 (CN); XU, Yahan, Zhejiang 315336 (CN); WANG, Zhenlong, Zhejiang 315336 (CN); JIN, Changming, Zhejiang 315336 (CN)
(74) Representative: Boult Wade Tennant LLP
(86) International application number: PCT/CN2025/082437
(87) International publication number: WO 2025/190360

(57) **Abstract**

A method and apparatus (50) for determining a longitudinal adhesion coefficient, a vehicle (60), a medium, and a program product. The method includes: determining (S201) a longitudinal adhesion coefficient of each wheel according to first wheel information of each wheel and a plurality of scenario adhesion coefficients; the first wheel information including longitudinal stiffness, a slip rate, and a normalized longitudinal force; determining (S202) a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and determining (S203) the longitudinal adhesion coefficient of the vehicle according to the first longitudinal adhesion coefficient, the first confidence level, the second longitudinal adhesion coefficient, and the second confidence level, thereby improving the accuracy of determining the longitudinal adhesion coefficient of the vehicle.

## Description

This application claims the priority of the Chinese Patent Application No. 202410301421.1, filed to the China National Intellectual Property Administration on March 15, 2024 and titled "METHOD AND APPARATUS FOR DETERMINING LONGITUDINAL ADHESION COEFFICIENT, VEHICLE, MEDIUM, AND PROGRAM PRODUCT", the disclosure of which is incorporated herein by reference in its entirety.

### TECHNICAL FIELD

Embodiments of the present application relate to, but are not limited to, the field of vehicle technology, in particular to a method and apparatus for determining a longitudinal adhesion coefficient, a vehicle, a medium, and a program product.

### BACKGROUND

An adhesion coefficient of a vehicle plays a crucial role in implementing anti-slip control for longitudinal driving of the vehicle. Therefore, accurately determining the adhesion coefficient of the vehicle is of vital importance for the anti-slip control of the vehicle.

### SUMMARY

An overview of a topic detailed herein is described as follows. The overview is not intended to limit the protection scope of the claims.

Embodiments of the present application provide a method and apparatus for determining a longitudinal adhesion coefficient, a vehicle, a medium, and a program product, which can improve the accuracy of determining the longitudinal adhesion coefficient of the vehicle.

In a first aspect, an embodiment of the present application provides a method for determining a longitudinal adhesion coefficient, including:
determining a longitudinal adhesion coefficient of each wheel according to first wheel information of each wheel and a plurality of scenario adhesion coefficients; the first wheel information including longitudinal stiffness, a slip rate, and a normalized longitudinal force;
determining a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and
determining the longitudinal adhesion coefficient of the vehicle according to the first longitudinal adhesion coefficient, the first confidence level, the second longitudinal adhesion coefficient, and the second confidence level.

In an implementation, determining the longitudinal adhesion coefficient of each wheel according to first wheel information of each wheel and the plurality of scenario adhesion coefficients includes:
for any wheel, determining, according to the first wheel information of the wheel and the plurality of scenario adhesion coefficients, a probability corresponding to each scenario adhesion coefficient; and
determining a longitudinal adhesion coefficient of the wheel according to the probability corresponding to each scenario adhesion coefficient and the plurality of scenario adhesion coefficients.

In an implementation, determining the first longitudinal adhesion coefficient and the first confidence level of the vehicle in the low adhesion state according to the longitudinal adhesion coefficients of the plurality of wheels includes:
acquiring an activation duration of a stability control system and a longitudinal acceleration change rate;
acquiring a slip rate deviation of each wheel;
for any wheel, if a plurality of low-adhesion estimation conditions are respectively satisfied, determining, according to the slip rate deviation of the wheel and the normalized longitudinal force of the wheel, whether the wheel is a wheel satisfying a first condition or a wheel satisfying a second condition; and
determining the first longitudinal adhesion coefficient and the first confidence level according to a number of a wheel satisfying the first condition, a number of a wheel satisfying the second condition, a longitudinal adhesion coefficient and a confidence level of each wheel satisfying the first condition as well as a longitudinal adhesion coefficient and a confidence level of each wheel satisfying the second condition;
where the plurality of low-adhesion estimation conditions include:
   the longitudinal adhesion coefficient of the wheel is greater than a first threshold, an estimation flag bit of the wheel is a valid flag bit, the activation duration is greater than a second threshold, and the longitudinal acceleration change rate is less than a third threshold.

In an implementation, determining, according to the slip rate deviation of the wheel and the normalized longitudinal force of the wheel, whether the wheel is the wheel satisfying the first condition or the wheel satisfying the second condition includes:
if the slip rate deviation of the wheel is greater than a first deviation threshold and is less than or equal to a second deviation threshold, and the normalized longitudinal force of the wheel is greater than a first longitudinal force threshold, determining that the wheel is the wheel satisfying the first condition; and
if the slip rate deviation of the wheel is greater than the second deviation threshold, and the normalized longitudinal force of the wheel is greater than the first longitudinal force threshold, determining that the wheel is the wheel satisfying the second condition.

In an implementation, determining the second longitudinal adhesion coefficient and the second confidence level of the vehicle in the high adhesion state according to the longitudinal adhesion coefficients of the plurality of wheels includes:
acquiring an activation duration of a stability control system;
for any wheel, if a plurality of high-adhesion estimation conditions are respectively satisfied, determining, according to the normalized longitudinal force of the wheel, whether the wheel is a wheel satisfying a third condition or a wheel satisfying a fourth condition; and
determining the second longitudinal adhesion coefficient and the second confidence level according to a number of a wheel satisfying the third condition, a number of a wheel satisfying the fourth condition, a longitudinal adhesion coefficient and a confidence level of each wheel satisfying the third condition as well as a longitudinal adhesion coefficient and a confidence level of each wheel satisfying the fourth condition;
where the plurality of high-adhesion estimation conditions include:
   the longitudinal adhesion coefficient of the wheel is greater than a fourth threshold, an estimation flag bit of the wheel is a valid flag bit, and the activation duration is greater than a fifth threshold.

In an implementation, determining, according to the normalized longitudinal force of the wheel, whether the wheel is a wheel satisfying a third condition or a wheel satisfying a fourth condition includes:
if the normalized longitudinal force of the wheel is greater than a second longitudinal force threshold and is less than or equal to a third longitudinal force threshold, determining that the wheel is the wheel satisfying the third condition; and
if the normalized longitudinal force of the wheel is greater than the third longitudinal force threshold, determining that the wheel is the wheel satisfying the fourth condition.

In an implementation, determining the longitudinal adhesion coefficient of the vehicle according to the first longitudinal adhesion coefficient, the first confidence level, the second longitudinal adhesion coefficient, and the second confidence level includes:
determining, according to the longitudinal adhesion coefficient of the wheel, the probability corresponding to each scenario adhesion coefficient, and the plurality of scenario adhesion coefficients, an adhesion coefficient variance corresponding to each wheel;
determining a scenario adhesion coefficient variance of the vehicle according to scenario adhesion coefficient variances corresponding to the plurality of wheels;
under a condition that the scenario adhesion coefficient variance of the vehicle is less than a variance threshold, if the first confidence level is greater than or equal to the second confidence level, determining the first longitudinal adhesion coefficient as the longitudinal adhesion coefficient;
if the first confidence level is less than the second confidence level, determining the second longitudinal adhesion coefficient as the longitudinal adhesion coefficient; and
under a condition that the scenario adhesion coefficient variance of the vehicle is greater than or equal to the variance threshold, determining a preset longitudinal adhesion coefficient as the longitudinal adhesion coefficient.

In an implementation, determining the scenario adhesion coefficient variance of the vehicle according to the scenario adhesion coefficient variances corresponding to the plurality of wheels includes:
for any wheel, determining a variance correction factor according to the first wheel information and second wheel information of the wheel; the second wheel information including a tire torque, an acceleration fluctuation value, a longitudinal vehicle speed mass factor, an Euler angle, a longitudinal vehicle speed, and/or a load;
correcting, according to the variance correction factor, the adhesion coefficient variance corresponding to the wheel to obtain a corrected variance;
accumulating reciprocals of corrected variances of the plurality of wheels to obtain a first accumulated value; and
determining a reciprocal of the first accumulated value as the scenario adhesion coefficient variance of the vehicle.

In an implementation, determining the longitudinal adhesion coefficient of each wheel according to the first wheel information of each wheel and the plurality of scenario adhesion coefficients includes:
under a condition that the vehicle satisfies any one or more of a plurality of longitudinal estimation conditions, determining the longitudinal adhesion coefficient of each wheel according to the first wheel information of each wheel and the plurality of scenario adhesion coefficients;
where the plurality of longitudinal estimation conditions include:
   a speed of the vehicle is within a preset range;
   an acceleration of the vehicle is less than or equal to an acceleration threshold;
   an angular velocity of the vehicle is less than or equal to an angular velocity threshold;
   a duration during which a steering wheel angle of the vehicle is greater than an angle threshold is less than or equal to a preset duration;
   a signal state of a sensor signal of the vehicle is a normal state; and
   a stability control system of the vehicle is activated.

In a second aspect, an embodiment of the present application provides an apparatus for determining a longitudinal adhesion coefficient, including:
a processing module, configured to determine a longitudinal adhesion coefficient of each wheel according to first wheel information of each wheel and a plurality of scenario adhesion coefficients; the first wheel information including longitudinal stiffness, a slip rate, and a normalized longitudinal force;
the processing module is further configured to determine a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and
a fusion module, configured to determine the longitudinal adhesion coefficient of the vehicle according to the first longitudinal adhesion coefficient, the first confidence level, the second longitudinal adhesion coefficient, and the second confidence level.

In an implementation, the processing module is specifically configured to:
for any wheel, determine, according to the first wheel information of the wheel and the plurality of scenario adhesion coefficients, a probability corresponding to each scenario adhesion coefficient; and
determine a longitudinal adhesion coefficient of the wheel according to the probability corresponding to each scenario adhesion coefficient and the plurality of scenario adhesion coefficients.

In an implementation, the processing module is specifically configured to:
acquire an activation duration of a stability control system and a longitudinal acceleration change rate;
acquire a slip rate deviation of each wheel;
for any wheel, if a plurality of low-adhesion estimation conditions are respectively satisfied, determine, according to the slip rate deviation of the wheel and the normalized longitudinal force of the wheel, whether the wheel is a wheel satisfying a first condition or a wheel satisfying a second condition; and
determine the first longitudinal adhesion coefficient and the first confidence level according to a number of a wheel satisfying the first condition, a number of a wheel satisfying the second condition, a longitudinal adhesion coefficient and a confidence level of each wheel satisfying the first condition as well as a longitudinal adhesion coefficient and a confidence level of each wheel satisfying the second condition;
where the plurality of low-adhesion estimation conditions include:
   the longitudinal adhesion coefficient of the wheel is greater than a first threshold, an estimation flag bit of the wheel is a valid flag bit, the activation duration is greater than a second threshold, and the longitudinal acceleration change rate is less than a third threshold.

In an implementation, the processing module is specifically configured to:
if the slip rate deviation of the wheel is greater than a first deviation threshold and is less than or equal to a second deviation threshold, and the normalized longitudinal force of the wheel is greater than a first longitudinal force threshold, determine that the wheel is the wheel satisfying the first condition; and
if the slip rate deviation of the wheel is greater than the second deviation threshold, and the normalized longitudinal force of the wheel is greater than the first longitudinal force threshold, determine that the wheel is the wheel satisfying the second condition.

In an implementation, the processing module is specifically configured to:
acquire an activation duration of a stability control system;
for any wheel, if a plurality of high-adhesion estimation conditions are respectively satisfied, determine, according to the normalized longitudinal force of the wheel, whether the wheel is a wheel satisfying a third condition or a wheel satisfying a fourth condition; and
determine the second longitudinal adhesion coefficient and the second confidence level according to a number of a wheel satisfying the third condition, a number of a wheel satisfying the fourth condition, a longitudinal adhesion coefficient and a confidence level of each wheel satisfying the third condition as well as a longitudinal adhesion coefficient and a confidence level of each wheel satisfying the fourth condition;
where the plurality of high-adhesion estimation conditions include:
   the longitudinal adhesion coefficient of the wheel is greater than a fourth threshold, an estimation flag bit of the wheel is a valid flag bit, and the activation duration is greater than a fifth threshold.

In an implementation, the processing module is specifically configured to:
if the normalized longitudinal force of the wheel is greater than a second longitudinal force threshold and is less than or equal to a third longitudinal force threshold, determine that the wheel is the wheel satisfying the third condition; and
if the normalized longitudinal force of the wheel is greater than the third longitudinal force threshold, determine that the wheel is the wheel satisfying the fourth condition.

In an implementation, the fusion module is specifically configured to:
determine, according to the longitudinal adhesion coefficient of the wheel, the probability corresponding to each scenario adhesion coefficient, and the plurality of scenario adhesion coefficients, an adhesion coefficient variance corresponding to each wheel;
determine a scenario adhesion coefficient variance of the vehicle according to scenario adhesion coefficient variances corresponding to the plurality of wheels;
under a condition that the scenario adhesion coefficient variance of the vehicle is less than a variance threshold, if the first confidence level is greater than or equal to the second confidence level, determine the first longitudinal adhesion coefficient as the longitudinal adhesion coefficient;
if the first confidence level is less than the second confidence level, determine the second longitudinal adhesion coefficient as the longitudinal adhesion coefficient; and
under a condition that the scenario adhesion coefficient variance of the vehicle is greater than or equal to the variance threshold, determine a preset longitudinal adhesion coefficient as the longitudinal adhesion coefficient.

In an implementation, the fusion module is specifically configured to:
for any wheel, determine a variance correction factor according to the first wheel information and second wheel information of the wheel; the second wheel information including a tire torque, an acceleration fluctuation value, a longitudinal vehicle speed mass factor, an Euler angle, a longitudinal vehicle speed, and/or a load;
correct, according to the variance correction factor, the adhesion coefficient variance corresponding to the wheel to obtain a corrected variance;
accumulate reciprocals of corrected variances of the plurality of wheels to obtain a first accumulated value; and
determine a reciprocal of the first accumulated value as the scenario adhesion coefficient variance of the vehicle.

In an implementation, the processing module is specifically configured to:
under a condition that the vehicle satisfies any one or more of a plurality of longitudinal estimation conditions, determine the longitudinal adhesion coefficient of each wheel according to the first wheel information of each wheel and the plurality of scenario adhesion coefficients;
where the plurality of longitudinal estimation conditions include:
   a speed of the vehicle is within a preset range;
   an acceleration of the vehicle is less than or equal to an acceleration threshold;
   an angular velocity of the vehicle is less than or equal to an angular velocity threshold;
   a duration during which a steering wheel angle of the vehicle is greater than an angle threshold is less than or equal to a preset duration;
   a signal state of a sensor signal of the vehicle is a normal state; and
   a stability control system of the vehicle is activated.

In a third aspect, an embodiment of the present application provides a vehicle, including:
a processor and a memory in communication connection with the processor;
the memory being configured to store computer-executable programs; and
the processor being configured to execute the computer-executable programs stored in the memory to implement the method for determining a longitudinal adhesion coefficient in the first aspect.

In a fourth aspect, an embodiment of the present application provides a computer-readable storage medium, the computer-readable storage medium having computer-executable instructions stored thereon, and the computer-executable instructions, when executed by a processor, implementing the method for determining a longitudinal adhesion coefficient in the first aspect.

In a fifth aspect, an embodiment of the present application provides a computer program product, including computer programs, and the computer programs, when executed by a processor, implementing the method for determining a longitudinal adhesion coefficient in the first aspect.

Embodiments of the present application provide a method and apparatus for determining a longitudinal adhesion coefficient, a vehicle, a medium, and a program product. In the method, a vehicle may determine a longitudinal adhesion coefficient of each wheel according to first wheel information of each wheel and a plurality of scenario adhesion coefficients; the first wheel information including longitudinal stiffness, a slip rate, and a normalized longitudinal force. The vehicle may determine a first longitudinal adhesion coefficient and a first confidence level of the vehicle in a low adhesion state as well as a second longitudinal adhesion coefficient and a second confidence level of the vehicle in a high adhesion state according to longitudinal adhesion coefficients of a plurality of wheels. The vehicle may determine the longitudinal adhesion coefficient of the vehicle according to the first longitudinal adhesion coefficient, the first confidence level, the second longitudinal adhesion coefficient, and the second confidence level. By adopting the above-mentioned method, the longitudinal adhesion coefficient can be accurately determined, the accuracy of determining the longitudinal adhesion coefficient of the vehicle is improved, thereby improving the control ability of the vehicle under driving conditions, and improving the safety of passengers.

After the accompanying drawings and detailed description are read and understood, other aspects may be understood.

### BRIEF DESCRIPTION OF DRAWINGS

The accompanying drawings in the following description only show some embodiments of the present application, and those of ordinary skill in the art may further derive other accompanying drawings from these accompanying drawings without creative work.
FIG. 1 is a schematic diagram of an application scenario applicable to an embodiment of the present application;
FIG. 2a is a schematic flowchart of a first embodiment of a method for determining a longitudinal adhesion coefficient provided by an embodiment of the present application;
FIG. 2b is a schematic diagram of a hyperbolic tangent fitting curve provided by an embodiment of the present application;
FIG. 3a is a schematic flowchart of a second embodiment of a method for determining a longitudinal adhesion coefficient provided by an embodiment of the present application;
FIG. 3b is a schematic flowchart for analyzing a wheel provided by an embodiment of the present application;
FIG. 4a is a schematic flowchart of a third embodiment of a method for determining a longitudinal adhesion coefficient provided by an embodiment of the present application;
FIG. 4b is another schematic flowchart for analyzing a wheel provided by an embodiment of the present application;
FIG. 5 is a schematic structural diagram of an apparatus for determining a longitudinal adhesion coefficient provided by an embodiment of the present application; and
FIG. 6 is a structural diagram of a vehicle provided by an embodiment of the present application.

### DESCRIPTION OF EMBODIMENTS

The described embodiments are a part of embodiments of the present application, not all the embodiments. Based on the embodiments in the present application, all other embodiments obtained by those of ordinary skill in the art under inspirations of the embodiments shall fall within the protection scope of the present application.

Terms such as "first", "second", "third" and "fourth" (if present) used in the description, the claims and the above-mentioned accompanying drawings of the present application are intended to distinguish similar objects, rather than to describe a specific sequence or order. It should be understood that data used in this way may be interchanged under appropriate circumstances such that the embodiments of the present application described here can be implemented in an order other than those illustrated or described here. In addition, terms "including" and "having" as well as any variations thereof intend to cover nonexclusive inclusion, for example, processes, methods, systems, products, or equipment that include a series of steps or units are not necessarily limited to steps or units clearly listed, but may include other steps or units that are not clearly listed or inherent to the processes, methods, products, or equipment.

A longitudinal adhesion coefficient of a vehicle plays a crucial role in implementing anti-slip control for longitudinal driving of the vehicle. Usually, the vehicle directly estimates the longitudinal adhesion coefficient according to a ratio of a longitudinal driving force to a vertical load, such that anti-slip control is performed on the vehicle according to the longitudinal adhesion coefficient. However, the method for directly estimating the longitudinal adhesion coefficient according to the ratio of the longitudinal driving force to the vertical load leads to inconsistence between an estimated longitudinal adhesion coefficient and a longitudinal adhesion coefficient during vehicle operation, which in turn leads to inaccurate anti-slip control of the vehicle and affects the safety of passengers.

An embodiment of the present application provides a method for determining a longitudinal adhesion coefficient, by which a vehicle may determine a longitudinal adhesion coefficient of each wheel according to first wheel information of each wheel and a plurality of scenario adhesion coefficients; the first wheel information including longitudinal stiffness, a slip rate, and a normalized longitudinal force. The vehicle may determine a first longitudinal adhesion coefficient and a first confidence level of the vehicle in a low adhesion state as well as a second longitudinal adhesion coefficient and a second confidence level of the vehicle in a high adhesion state according to longitudinal adhesion coefficients of a plurality of wheels. The vehicle may determine the longitudinal adhesion coefficient of the vehicle according to the first longitudinal adhesion coefficient, the first confidence level, the second longitudinal adhesion coefficient, and the second confidence level. By adopting the above-mentioned method, the longitudinal adhesion coefficient can be accurately determined, the accuracy of determining the longitudinal adhesion coefficient of the vehicle is improved, thereby improving the control ability of the vehicle under driving conditions, and improving the safety of passengers.

Principles and features of the embodiments of the present application will be described below in conjunction with the accompanying drawings, and the examples given are only intended to explain the embodiments of the present application, rather than to limit the scope of the embodiments of the present application.

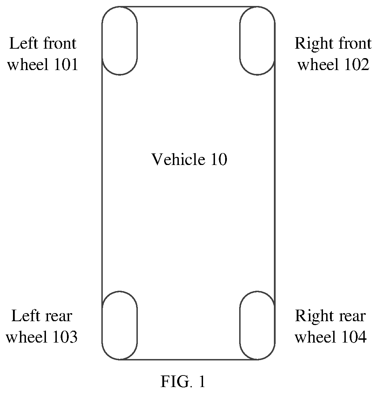

FIG. 1 is a schematic diagram of an application scenario applicable to an embodiment of the present application. The application scenario includes a vehicle 10 which includes a plurality of wheels. Exemplarily, FIG. 1 shows four wheels which are respectively a left front wheel 101, a right front wheel 102, a left rear wheel 103, and a right rear wheel 104.

In an implementation, a plurality of sensors (not shown in FIG. 1) may be further mounted on the vehicle 10. It should be explained that the plurality of sensors may include wheel speed sensors, inertial measurement unit (IMU) sensors, or wheel angle sensors.

In an implementation, the vehicle 10 may be further provided with a stability control system (not shown in FIG. 1).

It should be explained that the stability control system includes, but is not limited to an anti-lock braking system, an anti-slip system, a traction control system, an autonomous driving system, an automatic avoidance control system, and other systems that are operated based on information (such as information about rotation relative to two or more wheels (tires)) related to the rotation of one or more wheels (tires) of the vehicle.

In the application scenario, the vehicle 10 may determine a longitudinal adhesion coefficient of each wheel according to first wheel information of each wheel and a plurality of scenario adhesion coefficients; the first wheel information including longitudinal stiffness, a slip rate, and a normalized longitudinal force. The vehicle 10 may determine a first longitudinal adhesion coefficient and a first confidence level of the vehicle 10 in a low adhesion state as well as a second longitudinal adhesion coefficient and a second confidence level of the vehicle 10 in a high adhesion state according to longitudinal adhesion coefficients of a plurality of wheels. The vehicle 10 may determine the longitudinal adhesion coefficient of the vehicle 10 according to the first longitudinal adhesion coefficient, the first confidence level, the second longitudinal adhesion coefficient, and the second confidence level.

The embodiment of the present application does not limit an actual form of the vehicle included in FIG. 1, and in an application of the solution, the form may be set according to an actual need.

The technical solutions of the present application will be described in detail below in conjunction with specific embodiments. It should be explained that the following specific embodiments may be combined with each other, and the same or similar concepts or processes may be no longer repeated in some embodiments.

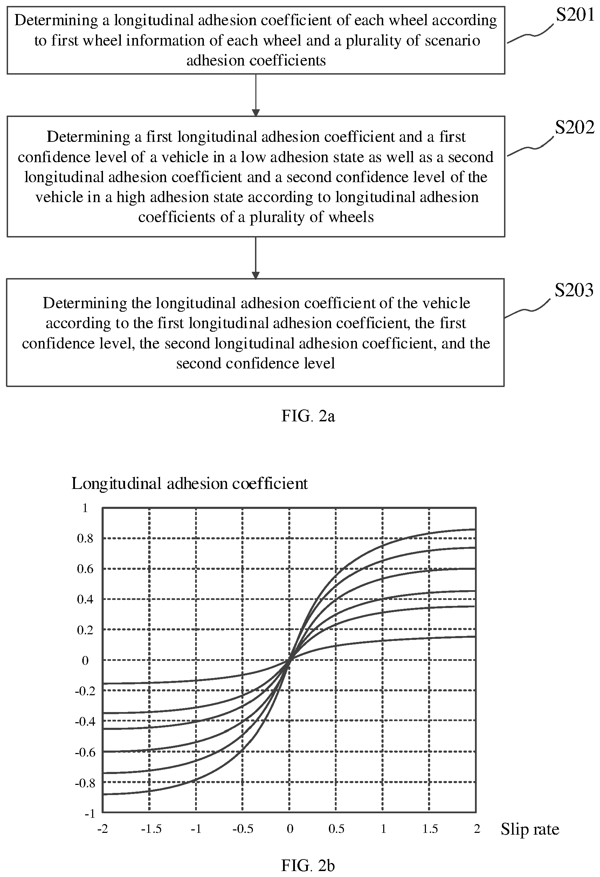

FIG. 2a is a schematic flowchart of a first embodiment of a method for determining a longitudinal adhesion coefficient provided by an embodiment of the present application. Refer to FIG. 2a, the method specifically includes the following steps.

S201: determining a longitudinal adhesion coefficient of each wheel according to first wheel information of each wheel and a plurality of scenario adhesion coefficients.

In this embodiment, the vehicle may acquire the first wheel information of each wheel and the plurality of scenario adhesion coefficients. The first wheel information includes longitudinal stiffness, a slip rate, and a normalized longitudinal force. It should be explained that the scenario adhesion coefficient refers to a longitudinal adhesion coefficient of the wheel in a road surface scenario.

The vehicle may determine the longitudinal adhesion coefficient of each wheel according to the first wheel information of each wheel and the plurality of scenario adhesion coefficients.

Specifically, in the process of determining the longitudinal adhesion coefficient of each wheel:
First of all, it should be explained that a numerical relationship between the longitudinal adhesion coefficient and the slip rate of the wheel satisfies a hyperbolic tangent fitting curve: $x \left(i\right) = muelevel \left(i\right) ∗ tanh \left(\frac{LongStfns \left(k\right) ∗ Slip \left(k\right)}{muelevel \left(i\right)}\right)$
where x(i) is the longitudinal adhesion coefficient of the wheel; muelevel(i) is the scenario adhesion coefficient, exemplarily, muelevel(i) may be any value among [0.15 0.35 0.45 0.6 0.75 0.9]; values of k are 1, 2, 3, and 4 representing the left front wheel, the right front wheel, the left rear wheel, and the right rear wheel in sequence; LongStfns(k) is the longitudinal stiffness; and Slip(k) is the slip rate.

FIG. 2b is a schematic diagram of a hyperbolic tangent fitting curve provided by an embodiment of the present application.

Based on that the numerical relationship between the longitudinal adhesion coefficient of the wheel and the slip rate satisfies the hyperbolic tangent fitting curve, for any wheel, the vehicle may determine, according to the first wheel information of the wheel and the plurality of scenario adhesion coefficients, a probability corresponding to each scenario adhesion coefficient. The vehicle may determine a longitudinal adhesion coefficient of the wheel according to the probability corresponding to each scenario adhesion coefficient and the plurality of scenario adhesion coefficients.

Exemplarily, the vehicle may calculate the longitudinal adhesion coefficient of the wheel by adopting the following formula: $P \left(1\right) = \frac{1}{{\sum }_{i = 1}^{6} P \left(i\right)} ∗ exp \left(\begin{matrix}- 160 ∗ {\left(FxNorm\left(k\right)-0.15∗tanh\left(\frac{LongStfns \left(k\right) ∗ Slip \left(k\right)}{0.15}\right)\right)}^{2} - \\ max \left(P\right)\end{matrix}\right)$ $P \left(2\right) = \frac{1}{{\sum }_{i = 1}^{6} P \left(i\right)} ∗ exp \left(\begin{matrix}- 160 ∗ {\left(FxNorm\left(k\right)-0.35∗tanh\left(\frac{LongStfns \left(k\right) ∗ Slip \left(k\right)}{0.35}\right)\right)}^{2} - \\ max \left(P\right)\end{matrix}\right)$ $P \left(3\right) = \frac{1}{{\sum }_{i = 1}^{6} P \left(i\right)} ∗ exp \left(\begin{matrix}- 160 ∗ {\left(FxNorm\left(k\right)-0.45∗tanh\left(\frac{LongStfns \left(k\right) ∗ Slip \left(k\right)}{0.45}\right)\right)}^{2} - \\ max \left(P\right)\end{matrix}\right)$ $P \left(4\right) = \frac{1}{{\sum }_{i = 1}^{6} P \left(i\right)} ∗ exp \left(\begin{matrix}- 160 ∗ {\left(FxNorm\left(k\right)-0.6∗tanh\left(\frac{LongStfns \left(k\right) ∗ Slip \left(k\right)}{0.6}\right)\right)}^{2} - \\ max \left(P\right)\end{matrix}\right)$ $P \left(5\right) = \frac{1}{{\sum }_{i = 1}^{6} P \left(i\right)} ∗ exp \left(\begin{matrix}- 160 ∗ {\left(FxNorm\left(k\right)-0.75∗tanh\left(\frac{LongStfns \left(k\right) ∗ Slip \left(k\right)}{0.75}\right)\right)}^{2} - \\ max \left(P\right)\end{matrix}\right)$ $P \left(6\right) = \frac{1}{{\sum }_{i = 1}^{6} P \left(i\right)} ∗ exp \left(\begin{matrix}- 160 ∗ {\left(FxNorm\left(k\right)-0.9∗tanh\left(\frac{LongStfns \left(k\right) ∗ Slip \left(k\right)}{0.75}\right)\right)}^{2} - \\ max \left(P\right)\end{matrix}\right)$$MueInst \left(k\right) = E \left(X\right) = P \left(1\right) ∗ 0.15 + P \left(2\right) ∗ 0.3 + P \left(3\right) ∗ 0.45 + P \left(4\right) ∗ 0.6 + P \left(5\right) ∗ 0.75 + P \left(6\right) ∗ 0.9$

It should be explained that P(1) is a probability corresponding to a first scenario adhesion coefficient, and 0.15 is the first scenario adhesion coefficient; P(2) is a probability corresponding to a second scenario adhesion coefficient, and 0.35 is the second scenario adhesion coefficient; P(3) is a probability corresponding to a third scenario adhesion coefficient, and 0.45 is the third scenario adhesion coefficient; P(4) is a probability corresponding to a fourth scenario adhesion coefficient, and 0.6 is the fourth scenario adhesion coefficient; P(5) is a probability corresponding to a fifth scenario adhesion coefficient, and 0.75 is the fifth scenario adhesion coefficient; and P(6) is a probability corresponding to a sixth scenario adhesion coefficient, and 0.9 is the sixth scenario adhesion coefficient.

It should be further explained that MueInst(k) is the longitudinal adhesion coefficient of the wheel, FxNorm(k) is the normalized longitudinal force, LongStfns(k) is the longitudinal stiffness, Slip(k) is the slip rate, and values of k are 1, 2, 3, and 4 representing the left front wheel, the right front wheel, the left rear wheel, and the right rear wheel in sequence.

It should be further explained that when the probability corresponding to each scenario adhesion coefficient is calculated, max(P) may use an initial value of 1/6, and ${\sum }_{i = 1}^{6} P \left(i\right)$ may use an initial value of 1.

S202: determining a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels.

In this embodiment, the vehicle may determine the first longitudinal adhesion coefficient and the first confidence level of the vehicle in the low adhesion state as well as the second longitudinal adhesion coefficient and the second confidence level of the vehicle in the high adhesion state according to the longitudinal adhesion coefficients of the plurality of wheels.

In the process of determining the first dynamic adhesion coefficient and the first confidence level:
the vehicle may acquire an activation duration of a stability control system and a longitudinal acceleration change rate. The vehicle may further acquire a slip rate deviation of each wheel.

For any wheel, under the condition of determining that the wheel satisfies a plurality of low-adhesion estimation conditions, the vehicle analyzes the wheel according to the slip rate deviation of the wheel and the normalized longitudinal force of the wheel to determine whether the wheel is a wheel satisfying a first condition or a wheel satisfying a second condition. The plurality of low-adhesion estimation conditions include: the longitudinal adhesion coefficient of the wheel is greater than a first threshold, an estimation flag bit of the wheel is a valid flag bit, the activation duration is greater than a second threshold, and the longitudinal acceleration change rate is less than a third threshold. It should be explained that under the condition of determining that an adhesion coefficient variance corresponding to the wheel is less than a sixth threshold, the vehicle determines that the estimation flag bit of the wheel is the valid flag bit; and under the condition of determining that the adhesion coefficient variance corresponding to the wheel is greater than or equal to a fifth threshold, the vehicle determines that the estimation flag bit of the wheel is an invalid flag bit. In addition, it should be further explained that the first threshold may be any value between 0 and 0.4, the third threshold may be any value between 200 milliseconds and 500 milliseconds, and the fourth threshold may be any value between 3000 and 5000.

After analyzing all the wheels, the vehicle may determine a number of a wheel satisfying the first condition and a number of a wheel satisfying the second condition.

The wheel may determine the first longitudinal adhesion coefficient and the first confidence level according to the number of the wheel satisfying the first condition, the number of the wheel satisfying the second condition, a longitudinal adhesion coefficient and a confidence level of each wheel satisfying the first condition as well as a longitudinal adhesion coefficient and a confidence level of each wheel satisfying the second condition.

In the process of determining the second dynamic adhesion coefficient and the second confidence level:
the vehicle may acquire an activation duration of a stability control system.

For any wheel, under the condition of determining that the wheel satisfies a plurality of high-adhesion estimation conditions, the vehicle determines, according to the normalized longitudinal force of the wheel, whether the wheel is a wheel satisfying a third condition or a wheel satisfying a fourth condition. The plurality of high-adhesion estimation conditions include: the longitudinal adhesion coefficient of the wheel is greater than a fourth threshold, an estimation flag bit of the wheel is a valid flag bit, and the activation duration is greater than a fifth threshold. It should be explained that the fourth threshold may be any value between 0.4 and 1, and the fifth threshold may be any value between 300 milliseconds and 500 milliseconds.

After analyzing all the wheels, the vehicle may determine the number of the wheel satisfying the third condition and the number of the wheel satisfying the fourth condition.

The vehicle may determine the second longitudinal adhesion coefficient and the second confidence level according to the number of the wheel satisfying the third condition, the number of the wheel satisfying the fourth condition, a longitudinal adhesion coefficient and a confidence level of each wheel satisfying the third condition as well as a longitudinal adhesion coefficient and a confidence level of each wheel satisfying the fourth condition;

S203: determining the longitudinal adhesion coefficient of the vehicle according to the first longitudinal adhesion coefficient, the first confidence level, the second longitudinal adhesion coefficient, and the second confidence level.

In this embodiment, the vehicle may determine the longitudinal adhesion coefficient thereof according to the first longitudinal adhesion coefficient, the first confidence level, the second longitudinal adhesion coefficient, and the second confidence level.

Specifically, the vehicle may determine, according to the longitudinal adhesion coefficient of the wheel, the probability corresponding to each scenario adhesion coefficient, and the plurality of scenario adhesion coefficients, an adhesion coefficient variance corresponding to each wheel.

Exemplarily, the vehicle may calculate the adhesion coefficient variance corresponding to each wheel by adopting the following formula. $MueVarInst \left(k\right) = D \left(x\right) = {p}_{1} {\left[{x}_{1}-E\left(X\right)\right]}^{2} + {p}_{2} {\left[{x}_{2}-E\left(X\right)\right]}^{2} + ⋯ + {p}_{n} {\left[{x}_{n}-E\left(X\right)\right]}^{2}$ where MueVarInst(k) is the adhesion coefficient variance corresponding to the wheel; n is the number of the scenario adhesion coefficients; E(X) is MueInst(k) and is the adhesion coefficient (expected value) of the wheel; x is the scenario adhesion coefficient; and P is the probability corresponding to each scenario adhesion coefficient.

The vehicle may determine a scenario adhesion coefficient variance thereof according to scenario adhesion coefficient variances corresponding to the plurality of wheels. Specifically, for any wheel, a variance correction factor is determined according to the first wheel information and second wheel information of the wheel; the second wheel information including a tire torque, an acceleration fluctuation value, a longitudinal vehicle speed mass factor, an Euler angle, a longitudinal vehicle speed, and/or a load. The vehicle may correct, according to the variance correction factor, the adhesion coefficient variance corresponding to the wheel, to obtain a corrected variance. The vehicle may accumulate reciprocals of corrected variances of the plurality of wheels to obtain a first accumulated value. The vehicle may determine a reciprocal of the first accumulated value as the scenario adhesion coefficient variance of the vehicle.

Exemplarily, the vehicle may determine the scenario adhesion coefficient variance thereof by adopting the following formula. $MueVarCmn = offset 1 + offset 2 + offset 3 + offset 4 + offset 5$ $MueVarInst \left(k\right) = MueVarInst \left(k\right) ∗ Factor 1 ∗ Factor 2 ∗ Factor 3 ∗ MueVarCmn$ $InstLongRfeMueVar = \frac{1}{{\sum }_{1}^{k} \frac{1}{MueVarInst \left(k\right)}}$ where MueVarInst(k) is the adhesion coefficient variance corresponding to the wheel; values of k are 1, 2, 3, and 4 representing the left front wheel, the right front wheel, the left rear wheel, and the right rear wheel in sequence; InstLongRfeMueVar is the scenario adhesion coefficient variance of the vehicle; Factor1 is a correction factor determined by the vehicle via table lookup according to a slip rate; Factor2 is a correction factor determined by the vehicle via table lookup according to a load; Factor3 is a correction factor determined by the vehicle via table lookup according to a normalized longitudinal force; offset1 is a correction factor determined by the vehicle via table lookup according to a tire torque; offset2 is a correction factor determined by the vehicle via table lookup according to an acceleration fluctuation value; offset3 is a correction factor determined by the vehicle via table lookup according to a longitudinal vehicle speed mass factor; offset4 is a correction factor determined by the vehicle via table lookup according to an Euler angle; and offset5 is a correction factor determined by a vehicle according to a longitudinal vehicle speed.

Under the condition of determining that the scenario adhesion coefficient variance of the vehicle is less than a variance threshold, the vehicle compares the first confidence level with the second confidence level.

If the first confidence level is greater than or equal to the second confidence level, the vehicle may determine the first longitudinal adhesion coefficient as the longitudinal adhesion coefficient. In addition, the vehicle may further determine the first confidence level as a confidence level of the longitudinal adhesion coefficient.

If the first confidence level is less than the second confidence level, the vehicle may determine the second longitudinal adhesion coefficient as the longitudinal adhesion coefficient. In addition, the vehicle may further determine the second confidence level as a confidence level of the longitudinal adhesion coefficient.

Under the condition of determining that the scenario adhesion coefficient variance of the vehicle is greater than or equal to the variance threshold, the vehicle may determine a preset longitudinal adhesion coefficient as the longitudinal adhesion coefficient. In addition, the vehicle may further determine a preset confidence level as the confidence level of the longitudinal adhesion coefficient. Exemplarily, the preset longitudinal adhesion coefficient may be 1, and the preset confidence level may be 0.

This embodiment has the beneficial effects: a vehicle may determine a longitudinal adhesion coefficient of each wheel according to a first wheel information of each wheel and a plurality of scenario adhesion coefficients; the first wheel information including longitudinal stiffness, a slip rate, and a normalized longitudinal force. The vehicle may determine the first longitudinal adhesion coefficient and the first confidence level of the vehicle in the low adhesion state as well as the second longitudinal adhesion coefficient and the second confidence level of the vehicle in the high adhesion state according to the longitudinal adhesion coefficients of the plurality of wheels. The vehicle may determine the longitudinal adhesion coefficient of the vehicle according to the first longitudinal adhesion coefficient, the first confidence level, the second longitudinal adhesion coefficient, and the second confidence level. By adopting the above-mentioned method, the longitudinal adhesion coefficient can be accurately determined, the accuracy of determining the longitudinal adhesion coefficient of the vehicle is improved, thereby improving the control ability of the vehicle under driving conditions, and improving the safety of passengers.

An implementation process that the vehicle determines the first longitudinal adhesion coefficient and the first confidence level thereof in the low adhesion state will be explained in detail below in the second method embodiment.

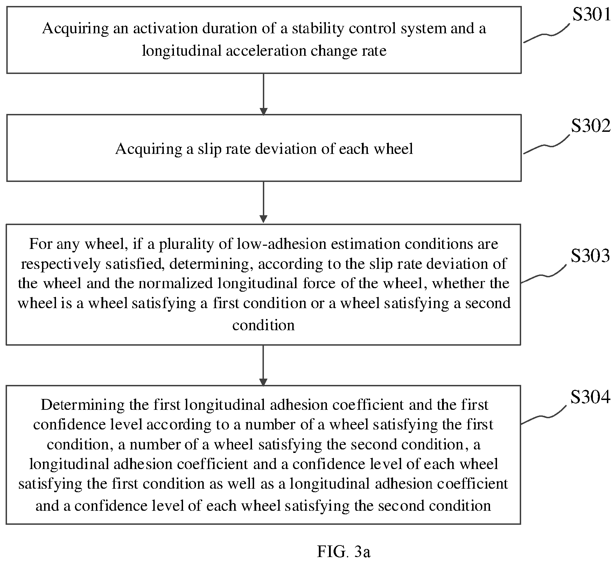

FIG. 3a is a schematic flowchart of a second embodiment of a method for determining a longitudinal adhesion coefficient provided by an embodiment of the present application. Refer to FIG. 3a, the method specifically includes the following steps.

S301: acquiring an activation duration of a stability control system and a longitudinal acceleration change rate.

In this embodiment, the vehicle may acquire the activation duration of the stability control system and the longitudinal acceleration change rate.

S302: acquiring a slip rate deviation of each wheel.

In this embodiment, the vehicle may acquire the slip rate deviation of each wheel.

S303: for any wheel, if a plurality of low-adhesion estimation conditions are respectively satisfied, determining, according to the slip rate deviation of the wheel and the normalized longitudinal force of the wheel, whether the wheel is a wheel satisfying a first condition or a wheel satisfying a second condition.

In this embodiment, for any wheel, under the condition of determining that the wheel satisfies the plurality of low-adhesion estimation conditions, the vehicle determines, according to the slip rate deviation of the wheel and the normalized longitudinal force of the wheel, whether the wheel is a wheel satisfying a first condition or a wheel satisfying a second condition.

The plurality of low-adhesion estimation conditions include:
the longitudinal adhesion coefficient of the wheel is greater than a first threshold;
an estimation flag bit of the wheel is a valid flag bit; the activation duration is greater than a second threshold; and
the longitudinal acceleration change rate is less than a third threshold.

The process that the vehicle determines, according to the slip rate deviation of the wheel and the normalized longitudinal force of the wheel, whether the wheel is a wheel satisfying a first condition or a wheel satisfying a second condition will be explained below.

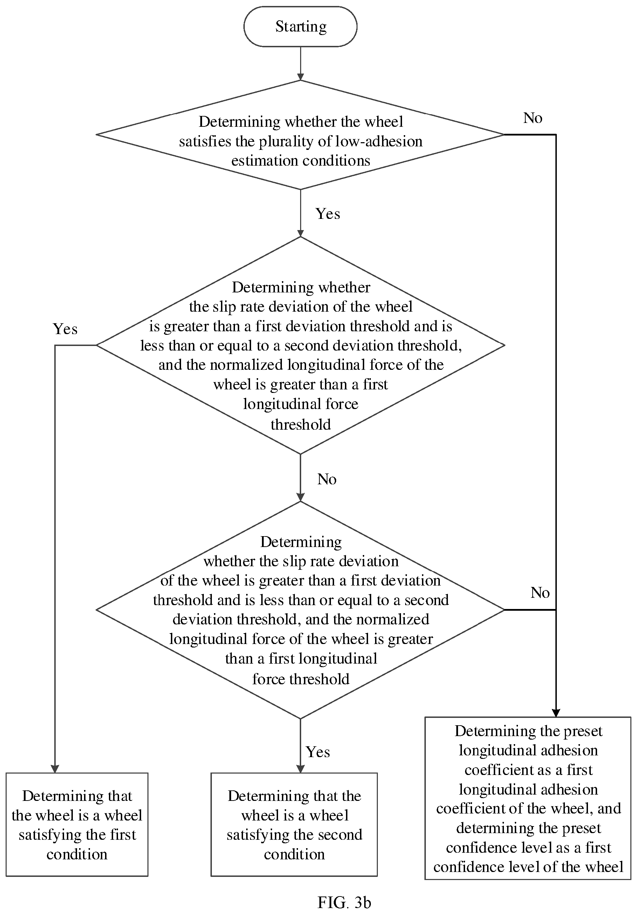

FIG. 3b is a schematic flowchart for analyzing a wheel provided by an embodiment of the present application. As shown in FIG. 3b, for any wheel, the vehicle may determine whether the wheel satisfies the plurality of low-adhesion estimation conditions.

If not, the preset longitudinal adhesion coefficient is determined as a first longitudinal adhesion coefficient of the wheel, and the preset confidence level is determined as a first confidence level of the wheel.

If so, it is determined whether the slip rate deviation of the wheel is greater than a first deviation threshold and is less than or equal to a second deviation threshold, and the normalized longitudinal force of the wheel is greater than a first longitudinal force threshold. If so, it is determined that the wheel is a wheel satisfying the first condition. If not, it is determined whether the slip rate deviation of the wheel is greater than the second deviation threshold, and the normalized longitudinal force of the wheel is greater than the first longitudinal force threshold. If so, it is determined that the wheel is a wheel satisfying the second condition; and if not, the preset longitudinal adhesion coefficient is determined as the first longitudinal adhesion coefficient of the wheel, and the preset confidence level is determined as the first confidence level of the wheel.

Exemplarily, the first deviation threshold may be any value between 0 and 0.04, the second deviation threshold may be any value between 0.04 and 1, and the first longitudinal force threshold may be any value between 0 and 0.12.

S304: determining the first longitudinal adhesion coefficient and the first confidence level according to a number of a wheel satisfying the first condition, a number of a wheel satisfying the second condition, a longitudinal adhesion coefficient and a confidence level of each wheel satisfying the first condition as well as a longitudinal adhesion coefficient and a confidence level of each wheel satisfying the second condition.

In this embodiment, the vehicle may determine the first longitudinal adhesion coefficient and the first confidence level according to the number of the wheel satisfying the first condition, the number of the wheel satisfying the second condition, the longitudinal adhesion coefficient and the confidence level of each wheel satisfying the first condition as well as the longitudinal adhesion coefficient and the confidence level of each wheel satisfying the second condition.

The process that the vehicle determines the first longitudinal adhesion coefficient and the first confidence level will be explained in detail below.

The vehicle may determine a ratio of the sum of longitudinal force adhesion coefficients of at least one wheel satisfying the first condition to the number of the wheel that satisfy the first condition as a first longitudinal adhesion coefficient under the first condition. In addition, the vehicle may further determine a first calibration parameter as a first confidence level under the first condition.

Exemplarily, the vehicle may determine the first longitudinal adhesion coefficient and the first confidence level under the first condition by adopting the following formula: $mueFastTrack = \frac{{\sum }_{k = 1}^{nofMidWheels} MueInst \left(k\right)}{nofMidWheels}$ $mueFastTrackConfd = cnfdLvlMidWheels$ where nofMidWheels is the number of the wheel satisfying the first condition, mueFastTrack is the first longitudinal adhesion coefficient under the first condition, mueFastTrackConfd is the first confidence level under the first condition, and cnfdLvlMidWheels is the first calibration parameter.

The vehicle may determine a ratio of the sum of longitudinal force adhesion coefficients of at least one wheel satisfying the second condition to the number of the wheel satisfying the second condition as a first longitudinal adhesion coefficient under the second condition. In addition, the vehicle may further determine a second calibration parameter as a first confidence level under the second condition.

Exemplarily, the vehicle may determine the first longitudinal adhesion coefficient under the second condition and the first confidence level under the second condition by adopting the following formula: $mueFastTrack = \frac{{\sum }_{k = 1}^{nofLargeWheels} MueInst \left(k\right)}{nofLargeWheels}$ $mueFastTrackConfd = cnfdLvlLargeWheels$ where nofLargeWheels is the number of the wheel satisfying the second condition, mueFastTrack is the first longitudinal adhesion coefficient under the first condition, mueFastTrackConfd is the first confidence level under the second condition, and cnfdLvlLargeWheels is the second calibration parameter.

The vehicle may analyze the number of the wheel satisfying the first condition and the number of the wheel satisfying the second condition:
Under the condition of determining that the number of the wheel satisfying the second condition is greater than 0 and the number of the wheel satisfying the first condition is 0, the vehicle may determine the first longitudinal adhesion coefficient under the second condition as the first longitudinal adhesion coefficient, and determine the first confidence level under the second condition as the first confidence level.

Under the condition of determining that the number of the wheel satisfying the first condition is greater than 0 and the number of the wheel satisfying the second condition is 0, the vehicle may determine the first longitudinal adhesion coefficient under the first condition as the first longitudinal adhesion coefficient, and determine the first confidence level under the first condition as the first confidence level.

Under the condition of determining that the number of the wheel satisfying the first condition is greater than 0 and the number of the wheel satisfying the second condition is greater than 0, the vehicle may determine the maximum value from the first longitudinal adhesion coefficient under the first condition and the first longitudinal adhesion coefficient under the second condition as the first longitudinal adhesion coefficient, and determine the confidence level corresponding to the maximum value as the first confidence level. In an implementation, the vehicle may further adjust the first confidence level after determining the confidence level corresponding to the maximum value as the first confidence level. Exemplarily, the vehicle may add the first confidence level to a third calibration parameter to adjust the first confidence level.

Under the condition of determining that the number of the wheel satisfying the first condition is 0 and the number of the wheel satisfying the second condition is 0, the vehicle may determine the preset longitudinal adhesion coefficient as the first longitudinal adhesion coefficient, and determine the preset confidence level as the first confidence level. Exemplarily, the preset longitudinal adhesion coefficient may be 1, and the preset confidence level may be 0.

This embodiment has the beneficial effects: for any wheel, when determining that the wheel satisfies a plurality of low-adhesion estimation conditions, the vehicle determines, according to the slip rate deviation of the wheel and the normalized longitudinal force of the wheel, whether the wheel is a wheel satisfying a first condition or a wheel satisfying a second condition. The vehicle may determine the first longitudinal adhesion coefficient and the first confidence level according to the number of the wheel satisfying the first condition, the number of the wheel satisfying the second condition, a longitudinal adhesion coefficient and a confidence level of each wheel satisfying the first condition as well as a longitudinal adhesion coefficient and a confidence level of each wheel satisfying the second condition. By adopting the above-mentioned method, the vehicle may accurately determine the first longitudinal adhesion coefficient and the first confidence level in the low adhesion state, such that the vehicle may accurately determine the longitudinal adhesion coefficient and the confidence level according to the first longitudinal adhesion coefficient and the first confidence level, the matching degree between the longitudinal adhesion coefficient and an actual situation of the vehicle is improved, and the control ability of the vehicle is further improved.

An implementation process that the vehicle determines the second longitudinal adhesion coefficient and the second confidence level thereof in the high adhesion state will be explained in detail below in the third method embodiment.

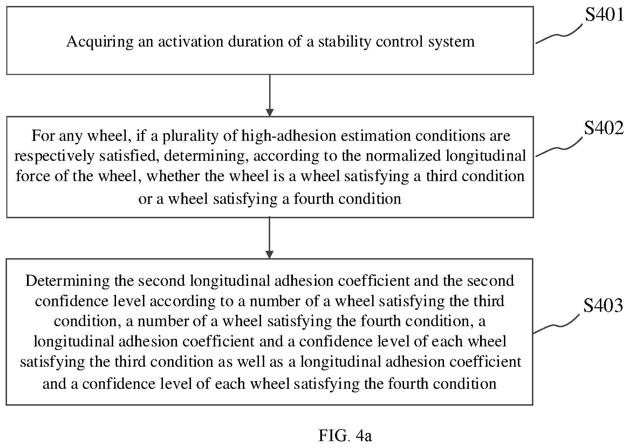

FIG. 4a is a schematic flowchart of a third embodiment of a method for determining a longitudinal adhesion coefficient provided by an embodiment of the present application. Refer to FIG. 4a, the method specifically includes the following steps.

S401: acquiring an activation duration of a stability control system.

In this embodiment, the vehicle may acquire the activation duration of the stability control system.

S402: for any wheel, if a plurality of high-adhesion estimation conditions are respectively satisfied, determining, according to the normalized longitudinal force of the wheel, whether the wheel is a wheel satisfying a third condition or a wheel satisfying a fourth condition.

In this embodiment, for any wheel, under the condition of determining that the wheel satisfies the plurality of high-adhesion estimation conditions, the vehicle determines, according to the normalized longitudinal force of the wheel, whether the wheel is a wheel satisfying a third condition or a wheel satisfying a fourth condition.

The plurality of high-adhesion estimation conditions include:
The longitudinal adhesion coefficient of the wheel is greater than a fourth threshold, and it should be explained that the fourth threshold may be any value between 0.4 and 1;
an estimation flag bit of the wheel is a valid flag bit;
the activation duration is greater than a fifth threshold; and it should be explained that the fifth threshold may be any value between 300 milliseconds and 500 milliseconds.

The process that the vehicle determines, according to the normalized longitudinal force of the wheel, whether the wheel is a wheel satisfying a third condition or a wheel satisfying a fourth condition will be explained below.

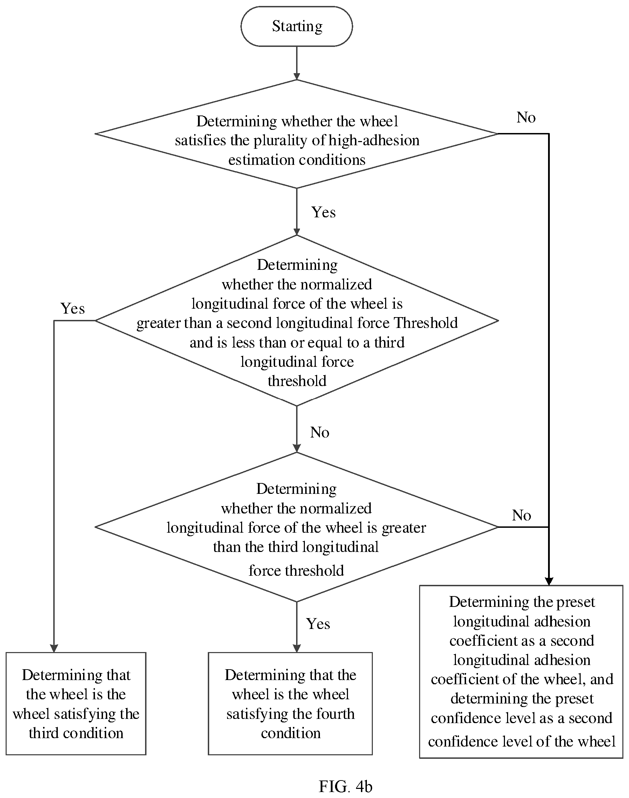

FIG. 4b is another schematic flowchart for analyzing a wheel provided by an embodiment of the present application. As shown in FIG. 4b, for any wheel, the vehicle may determine whether the wheel satisfies the plurality of high-adhesion estimation conditions.

If not, the preset longitudinal adhesion coefficient is determined as the second longitudinal adhesion coefficient of the wheel, and the preset confidence level is determined as the second confidence level of the wheel.

If so, it is determined whether the normalized longitudinal force of the wheel is greater than a second longitudinal force threshold and is less than or equal to a third longitudinal force threshold. If so, it is determined that the wheel is the wheel satisfying the third condition. If not, it is determined whether the normalized longitudinal force of the wheel is greater than the third longitudinal force threshold. If so, it is determined that the wheel is the wheel satisfying the fourth condition; and if not, the preset longitudinal adhesion coefficient is determined as a second longitudinal adhesion coefficient of the wheel, and the preset confidence level is determined as a second confidence level of the wheel.

Exemplarily, the second longitudinal force threshold may be any value between 0 and 0.55, and the third longitudinal force threshold may be any value between 0.65 and 1.

S403: determining the second longitudinal adhesion coefficient and the second confidence level according to a number of a wheel satisfying the third condition, a number of a wheel satisfying the fourth condition, a longitudinal adhesion coefficient and a confidence level of each wheel satisfying the third condition as well as a longitudinal adhesion coefficient and a confidence level of each wheel satisfying the fourth condition.

In this embodiment, the vehicle may determine the second longitudinal adhesion coefficient and the second confidence level according to the number of the wheel satisfying the third condition, the number of the wheel satisfying the fourth condition, the longitudinal adhesion coefficient and the confidence level of each wheel satisfying the third condition as well as the longitudinal adhesion coefficient and the confidence level of each wheel satisfying the fourth condition.

The process that the vehicle determines the second longitudinal adhesion coefficient and the second confidence level will be explained in detail below.

The vehicle may determine a ratio of the sum of longitudinal force adhesion coefficients of at least one wheel satisfying the third condition to the number of the wheel satisfying the third condition as a second longitudinal adhesion coefficient under the third condition. In addition, the vehicle may further determine a fourth calibration parameter as a second confidence level under the third condition.

Exemplarily, the vehicle may determine the second longitudinal adhesion coefficient under the third condition and the second confidence level under the third condition by adopting the following formula: $mueFastTrack = \frac{{\sum }_{k = 1}^{nofMidWheels} MueInst \left(k\right)}{nofMidWheels}$ $mueFastTrackConfd = cnfdLvlMidWheels$ where nofMidWheels is the number of the wheel satisfying the third condition, mueFastTrack is the second longitudinal adhesion coefficient under the third condition, mueFastTrackConfd is the second confidence level under the third condition, and cnfdLvlMidWheels is the fourth calibration parameter.

The vehicle may determine a ratio of the sum of longitudinal force adhesion coefficients of at least one wheel satisfying the fourth condition to the number of the wheel satisfying the fourth condition as a second longitudinal adhesion coefficient under the fourth condition. In addition, the vehicle may further determine a fifth calibration parameter as a second confidence level under the fourth condition.

Exemplarily, the vehicle may determine the second longitudinal adhesion coefficient under the fourth condition and the second confidence level under the fourth condition by adopting the following formula: $mueFastTrack = \frac{{\sum }_{k = 1}^{nofLargeWheels} MueInst \left(k\right)}{nofLargeWheels}$ $mueFastTrackConfd = cnfdLvlLargeWheels$ where nofLargeWheels is the number of the wheel satisfying the fourth condition, mueFastTrack is the second longitudinal adhesion coefficient under the fourth condition, mueFastTrackConfd is the second confidence level under the fourth condition, and cnfdLvlLargeWheels is the fifth calibration parameter.

The vehicle may analyze the number of the wheel satisfying the third condition and the number of the wheel satisfying the fourth condition:
under the condition of determining that the number of the wheel satisfying the fourth condition is greater than 0 and the number of the wheel satisfying the third condition is 0, the vehicle may determine the second longitudinal adhesion coefficient under the fourth condition as the second longitudinal adhesion coefficient, and determine the second confidence level under the fourth condition as the second confidence level.

Under the condition of determining that the number of the wheel satisfying the third condition is greater than 0 and the number of the wheel satisfying the fourth condition is 0, the vehicle may determine the second longitudinal adhesion coefficient under the third condition as the second longitudinal adhesion coefficient, and determine the second confidence level under the third condition as the second confidence level.

Under the condition of determining that the number of the wheel satisfying the third condition is greater than 0 and the number of the wheel satisfying the fourth condition is greater than 0, the vehicle may determine the maximum value from the second longitudinal adhesion coefficient under the third condition and the second longitudinal adhesion coefficient under the fourth condition as the second longitudinal adhesion coefficient, and determine the confidence level corresponding to the maximum value as the second confidence level. In an implementation, the vehicle may further adjust the second confidence level after determining the confidence level corresponding to the maximum value as the second confidence level. Exemplarily, the vehicle may add the second confidence level to a sixth calibration parameter to adjust the second confidence level.

Under the condition of determining that the number of the wheel satisfying the third condition is 0 and the number of the wheel satisfying the fourth condition is 0, the vehicle may determine the preset longitudinal adhesion coefficient as the second longitudinal adhesion coefficient, and determine the preset confidence level as the second confidence level. Exemplarily, the preset longitudinal adhesion coefficient may be 1, and the preset confidence level may be 0.

This embodiment has the beneficial effects: for any wheel, under the condition of determining that the wheel satisfies the plurality of high-adhesion estimation conditions, the vehicle may determine, according to the normalized longitudinal force of the wheel, whether the wheel is a wheel satisfying a third condition or a wheel satisfying a fourth condition. The vehicle may determine the second longitudinal adhesion coefficient and the second confidence level according to the number of the wheel satisfying the third condition, the number of the wheel satisfying the fourth condition, a longitudinal adhesion coefficient and a confidence level of each wheel satisfying the third condition as well as a longitudinal adhesion coefficient and a confidence level of each wheel satisfying the fourth condition; By adopting the above-mentioned method, the vehicle may accurately determine the second longitudinal adhesion coefficient and the second confidence level in the high adhesion state, such that the vehicle may accurately determine the longitudinal adhesion coefficient and the confidence level according to the second longitudinal adhesion coefficient and the second confidence level, the matching degree between the longitudinal adhesion coefficient and an actual situation of the vehicle is improved, and the control ability of the vehicle is further improved.

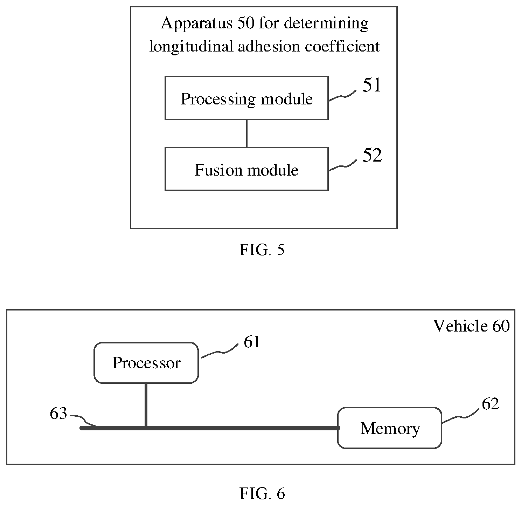

FIG. 5 is a schematic structural diagram of an apparatus for determining a longitudinal adhesion coefficient provided by an embodiment of the present application. As shown in FIG. 5, the apparatus 50 for determining a longitudinal adhesion coefficient includes a processing module 51 and a fusion module 52.

The processing module 51 is configured to determine a longitudinal adhesion coefficient of each wheel according to first wheel information of each wheel and a plurality of scenario adhesion coefficients; the first wheel information including longitudinal stiffness, a slip rate, and a normalized longitudinal force;
the processing module 51 is further configured to determine a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and
the fusion module 52 is configured to determine the longitudinal adhesion coefficient of the vehicle according to the first longitudinal adhesion coefficient, the first confidence level, the second longitudinal adhesion coefficient, and the second confidence level.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
for any wheel, determine, according to the first wheel information of the wheel and the plurality of scenario adhesion coefficients, a probability corresponding to each scenario adhesion coefficient; and
determine a longitudinal adhesion coefficient of the wheel according to the probability corresponding to each scenario adhesion coefficient and the plurality of scenario adhesion coefficients.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
acquire an activation duration of a stability control system and a longitudinal acceleration change rate;
acquire a slip rate deviation of each wheel;
for any wheel, if a plurality of low-adhesion estimation conditions are respectively satisfied, determine, according to the slip rate deviation of the wheel and the normalized longitudinal force of the wheel, whether the wheel is a wheel satisfying a first condition or a wheel satisfying a second condition; and
determine the first longitudinal adhesion coefficient and the first confidence level according to a number of a wheel satisfying the first condition, a number of a wheel satisfying the second condition, a longitudinal adhesion coefficient and a confidence level of each wheel satisfying the first condition as well as a longitudinal adhesion coefficient and a confidence level of each wheel satisfying the second condition;
where the plurality of low-adhesion estimation conditions include:
   the longitudinal adhesion coefficient of the wheel is greater than a first threshold, an estimation flag bit of the wheel is a valid flag bit, the activation duration is greater than a second threshold, and the longitudinal acceleration change rate is less than a third threshold.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
if the slip rate deviation of the wheel is greater than a first deviation threshold and is less than or equal to a second deviation threshold, and the normalized longitudinal force of the wheel is greater than a first longitudinal force threshold, determine that the wheel is the wheel satisfying the first condition; and
if the slip rate deviation of the wheel is greater than the second deviation threshold, and the normalized longitudinal force of the wheel is greater than the first longitudinal force threshold, determine that the wheel is the wheel satisfying the second condition.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
acquire an activation duration of a stability control system;
for any wheel, if a plurality of high-adhesion estimation conditions are respectively satisfied, determine, according to the normalized longitudinal force of the wheel, whether the wheel is a wheel satisfying a third condition or a wheel satisfying a fourth condition; and
determine the second longitudinal adhesion coefficient and the second confidence level according to a number of a wheel satisfying the third condition, a number of a wheel satisfying the fourth condition, a longitudinal adhesion coefficient and a confidence level of each wheel satisfying the third condition as well as a longitudinal adhesion coefficient and a confidence level of each wheel satisfying the fourth condition;
where the plurality of high-adhesion estimation conditions include:
   the longitudinal adhesion coefficient of the wheel is greater than a fourth threshold, an estimation flag bit of the wheel is a valid flag bit, and the activation duration is greater than a fifth threshold.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
if the normalized longitudinal force of the wheel is greater than a second longitudinal force threshold and is less than or equal to a third longitudinal force threshold, determine that the wheel is the wheel satisfying the third condition; and
if the normalized longitudinal force of the wheel is greater than the third longitudinal force threshold, determine that the wheel is the wheel satisfying the fourth condition.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the fusion module 52 is specifically configured to:
determine, according to the longitudinal adhesion coefficient of the wheel, the probability corresponding to each scenario adhesion coefficient, and the plurality of scenario adhesion coefficients, an adhesion coefficient variance corresponding to each wheel;
determine a scenario adhesion coefficient variance of the vehicle according to scenario adhesion coefficient variances corresponding to the plurality of wheels;
under a condition that the scenario adhesion coefficient variance of the vehicle is less than a variance threshold, if the first confidence level is greater than or equal to the second confidence level, determine the first longitudinal adhesion coefficient as the longitudinal adhesion coefficient;
if the first confidence level is less than the second confidence level, determine the second longitudinal adhesion coefficient as the longitudinal adhesion coefficient; and
under a condition that the scenario adhesion coefficient variance of the vehicle is greater than or equal to the variance threshold, determine a preset longitudinal adhesion coefficient as the longitudinal adhesion coefficient.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the fusion module 52 is specifically configured to:
for any wheel, determine a variance correction factor according to the first wheel information and second wheel information of the wheel; the second wheel information including a tire torque, an acceleration fluctuation value, a longitudinal vehicle speed mass factor, an Euler angle, a longitudinal vehicle speed, and/or a load;
correct, according to the variance correction factor, the adhesion coefficient variance corresponding to the wheel to obtain a corrected variance;
accumulate reciprocals of corrected variances of the plurality of wheels to obtain a first accumulated value; and
determine a reciprocal of the first accumulated value as the scenario adhesion coefficient variance of the vehicle.

The apparatus for determining a longitudinal adhesion coefficient in the embodiment of the present application may perform the technical solution shown in the above-mentioned method embodiments, and has similar implementation principles and beneficial effects so as to be no longer repeated herein.

In an implementation, the processing module 51 is specifically configured to:
under a condition that the vehicle satisfies any one or more of a plurality of longitudinal estimation conditions, determine the longitudinal adhesion coefficient of each wheel according to the first wheel information of each wheel and the plurality of scenario adhesion coefficients;
where the plurality of longitudinal estimation conditions include:
   a speed of the vehicle is within a preset range;
   an acceleration of the vehicle is less than or equal to an acceleration threshold;
   an angular velocity of the vehicle is less than or equal to an angular velocity threshold;
   a duration during which a steering wheel angle of the vehicle is greater than an angle threshold is less than or equal to a preset duration;
   a signal state of a sensor signal of the vehicle is a normal state; and
   a stability control system of the vehicle is activated.

The apparatus for determining a longitudinal adhesion coefficient in the embodiment of the present application may perform the technical solution shown in the above-mentioned method embodiments, and has similar implementation principles and beneficial effects so as to be no longer repeated herein.

FIG. 6 is a structural diagram of a vehicle provided by an embodiment of the present application. As shown in FIG. 6, the vehicle 60 includes a processor 61 and a memory 62. The processor 61 is in communication connection with the memory 62; the memory 62 is configured to store the computer-executable instructions; and the processor 61 is configured to execute the technical solution in any one of the aforementioned method embodiments by executing the computer-executable instructions stored in the memory 62.

Optionally, the memory 62 may be either independent or integrated with the processor 61. Optionally, when the memory 62 is a device independent of the processor 61, the vehicle 60 may further include a bus 63 configured to connect the above-mentioned devices.

The vehicle is configured to execute the technical solution in any one of the aforementioned method embodiments, and has similar implementation principles and technical effects so as to be no longer repeated herein.

An embodiment of the present application further provides a computer-readable storage medium, the computer-readable storage medium having computer-executable instructions stored thereon, and the computer-executable instructions, when executed by a processor, being configured to implement the technical solution provided in any one of the aforementioned method embodiments.

An embodiment of the present application provides a computer program product, including computer programs, and the computer programs, when executed by a processor, being configured to implement the technical solutions provided in the aforementioned method embodiments.

Those of ordinary skill in the art may understand that all or part of steps of the above-mentioned methods may be completed by a program instructing relevant hardware (such as a processor), and the program may be stored in a computer-readable storage medium such as a read-only memory, a magnetic disk or an optical disk. Optionally, all or part of the steps in the above-mentioned embodiments may also be implemented by using one or more integrated circuits. Correspondingly, each module/unit in the above-mentioned embodiments may be implemented in a form of hardware, for example, corresponding functions are implemented through integrated circuits; or the module/unit is implemented in a form of software function modules, for example, corresponding functions are implemented by a processor executing programs/instructions stored in a memory. The present application is not limited to any specific form of combination of hardware and software.

Finally, it should be explained that each of above embodiments is only intended to explain the technical solutions of the present application, rather than to limit thereto; although the present application has been described in detail with reference to each of the aforementioned embodiments, those of ordinary skill in the art should understand that the technical solution recorded in each of the aforementioned embodiments may be still modified, or all or part of technical features thereof may be equivalently substituted; and these modifications or substitutions do not enable essences of the corresponding technical solutions to deviate from the scope of the technical solution of each embodiment of the present application.

## Claims

1. A method for determining a longitudinal adhesion coefficient, comprising:
determining a longitudinal adhesion coefficient of each wheel according to first wheel information of each wheel and a plurality of scenario adhesion coefficients; the first wheel information comprising longitudinal stiffness, a slip rate, and a normalized longitudinal force;
determining a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and
determining the longitudinal adhesion coefficient of the vehicle according to the first longitudinal adhesion coefficient, the first confidence level, the second longitudinal adhesion coefficient, and the second confidence level.

2. The method of claim 1, wherein
for any wheel, determining, according to the first wheel information of the wheel and the plurality of scenario adhesion coefficients, a probability corresponding to each scenario adhesion coefficient; and
determining a longitudinal adhesion coefficient of the wheel according to the probability corresponding to each scenario adhesion coefficient and the plurality of scenario adhesion coefficients.

3. The method of claim 2, wherein
acquiring an activation duration of a stability control system and a longitudinal acceleration change rate;
acquiring a slip rate deviation of each wheel;
for any wheel, if a plurality of low-adhesion estimation conditions are respectively satisfied, determining, according to the slip rate deviation of the wheel and the normalized longitudinal force of the wheel, whether the wheel is a wheel satisfying a first condition or a wheel satisfying a second condition; and
determining the first longitudinal adhesion coefficient and the first confidence level according to a number of a wheel satisfying the first condition, a number of a wheel satisfying the second condition, a longitudinal adhesion coefficient and a confidence level of each wheel satisfying the first condition as well as a longitudinal adhesion coefficient and a confidence level of each wheel satisfying the second condition;
wherein the plurality of low-adhesion estimation conditions comprise:
the longitudinal adhesion coefficient of the wheel is greater than a first threshold, an estimation flag bit of the wheel is a valid flag bit, the activation duration is greater than a second threshold, and the longitudinal acceleration change rate is less than a third threshold.

4. The method of claim 3, wherein
if the slip rate deviation of the wheel is greater than a first deviation threshold and is less than or equal to a second deviation threshold, and the normalized longitudinal force of the wheel is greater than a first longitudinal force threshold, determining that the wheel is the wheel satisfying the first condition; and
if the slip rate deviation of the wheel is greater than the second deviation threshold, and the normalized longitudinal force of the wheel is greater than the first longitudinal force threshold, determining that the wheel is the wheel satisfying the second condition.

5. The method of claim 2, wherein
acquiring an activation duration of a stability control system;
for any wheel, if a plurality of high-adhesion estimation conditions are respectively satisfied, determining, according to the normalized longitudinal force of the wheel, whether the wheel is a wheel satisfying a third condition or a wheel satisfying a fourth condition; and
determining the second longitudinal adhesion coefficient and the second confidence level according to a number of a wheel satisfying the third condition, a number of a wheel satisfying the fourth condition, a longitudinal adhesion coefficient and a confidence level of each wheel satisfying the third condition as well as a longitudinal adhesion coefficient and a confidence level of each wheel satisfying the fourth condition;
wherein the plurality of high-adhesion estimation conditions comprise:
the longitudinal adhesion coefficient of the wheel is greater than a fourth threshold, an estimation flag bit of the wheel is a valid flag bit, and the activation duration is greater than a fifth threshold.

6. The method of claim 5, wherein
if the normalized longitudinal force of the wheel is greater than a second longitudinal force threshold and is less than or equal to a third longitudinal force threshold, determining that the wheel is the wheel satisfying the third condition; and
if the normalized longitudinal force of the wheel is greater than the third longitudinal force threshold, determining that the wheel is the wheel satisfying the fourth condition.

7. The method of claim 1, wherein
determining, according to the longitudinal adhesion coefficient of the wheel, the probability corresponding to each scenario adhesion coefficient, and the plurality of scenario adhesion coefficients, an adhesion coefficient variance corresponding to each wheel;
determining a scenario adhesion coefficient variance of the vehicle according to scenario adhesion coefficient variances corresponding to the plurality of wheels;
under a condition that the scenario adhesion coefficient variance of the vehicle is less than a variance threshold, if the first confidence level is greater than or equal to the second confidence level, determining the first longitudinal adhesion coefficient as the longitudinal adhesion coefficient;
if the first confidence level is less than the second confidence level, determining the second longitudinal adhesion coefficient as the longitudinal adhesion coefficient; and
under a condition that the scenario adhesion coefficient variance of the vehicle is greater than or equal to the variance threshold, determining a preset longitudinal adhesion coefficient as the longitudinal adhesion coefficient.

8. The method of claim 7, wherein
for any wheel, determining a variance correction factor according to the first wheel information and second wheel information of the wheel; the second wheel information including a tire torque, an acceleration fluctuation value, a longitudinal vehicle speed mass factor, an Euler angle, a longitudinal vehicle speed, and/or a load;
correcting, according to the variance correction factor, the adhesion coefficient variance corresponding to the wheel, to obtain a corrected variance;
accumulating reciprocals of corrected variances of the plurality of wheels to obtain a first accumulated value; and
determining a reciprocal of the first accumulated value as the scenario adhesion coefficient variance of the vehicle.

9. The method of claim 1, wherein
under a condition that the vehicle satisfies any one or more of a plurality of longitudinal estimation conditions, determining the longitudinal adhesion coefficient of each wheel according to the first wheel information of each wheel and the plurality of scenario adhesion coefficients;
wherein the plurality of longitudinal estimation conditions comprise:
a speed of the vehicle is within a preset range;
an acceleration of the vehicle is less than or equal to an acceleration threshold;
an angular velocity of the vehicle is less than or equal to an angular velocity threshold;
a duration during which a steering wheel angle of the vehicle is greater than an angle threshold is less than or equal to a preset duration;
a signal state of a sensor signal of the vehicle is a normal state; and
a stability control system of the vehicle is activated.

10. An apparatus for determining a longitudinal adhesion coefficient, comprising:
a processing module, configured to determine a longitudinal adhesion coefficient of each wheel according to first wheel information of each wheel and a plurality of scenario adhesion coefficients; the first wheel information comprising longitudinal stiffness, a slip rate, and a normalized longitudinal force;
the processing module is further configured to determine a first longitudinal adhesion coefficient and a first confidence level of a vehicle in a low adhesion state as well as a second longitudinal adhesion coefficient and a second confidence level of the vehicle in a high adhesion state according to longitudinal adhesion coefficients of a plurality of wheels; and
a fusion module, configured to determine the longitudinal adhesion coefficient of the vehicle according to the first longitudinal adhesion coefficient, the first confidence level, the second longitudinal adhesion coefficient, and the second confidence level.

11. A vehicle, comprising:
a processor and a memory in communication connection with the processor;
the memory being configured to store computer-executable programs; and
the processor being configured to execute the computer-executable programs stored in the memory to implement the method for determining a longitudinal adhesion coefficient of any one of claims 1 to 9.

12. A computer-readable storage medium, the computer-readable storage medium having computer-executable instructions stored thereon, and the computer-executable instructions, when executed by a processor, implementing the method for determining a longitudinal adhesion coefficient of any one of claims 1 to 9.

13. A computer program product, comprising computer programs, and the computer programs, when executed by a processor, implementing the method for determining a longitudinal adhesion coefficient of any one of claims 1 to 9.
